# EUROPEAN PATENT APPLICATION

(11) **EP 4 765 733 A1**
(43) Date of publication of application: **24.06.2026**
(21) Application number: 24222919.3
(22) Date of filing: 23.12.2024
(51) Int. Cl.: H04L 9/40, G06F 9/455, H04L 61/4511

(54) **SECURE REMOTE HOST CONNECTIVITY FOR VIRTUAL MACHINES**

(71) Applicant: Barclays Execution Services Limited, London E14 5HP (GB)
(72) Inventor: EDGE,, Jamie, London, E14 5HP (GB)
(74) Representative: Carpmaels & Ransford LLP

(57) **Abstract**

A method of connecting to a host on a remote server outside a secure network from an application running on a virtual machine hosted within the secure network is provided. The method comprises: a) establishing, by a connection handshake server on the secure network, a non-encrypted connection with the application; and b) establishing, by the connection handshake server, an encrypted connection between the host and the application via the connection handshake server.

## Description

### Technical Field

The present invention relates to secure remote host connectivity for virtual machines. In particular, the invention relates to methods, secure networks, and computer programs for connecting to a host on a remote server outside a secure network from an application running on a virtual machine hosted within the secure network.

### Background

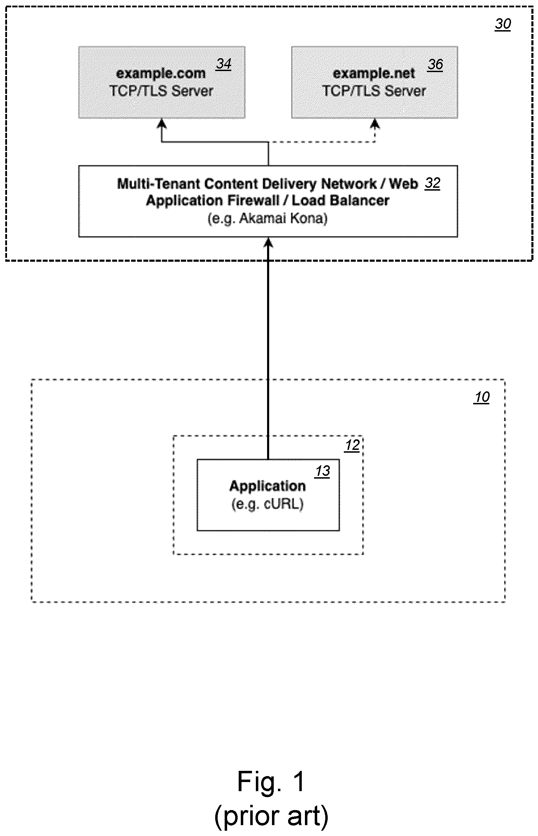

Secure networks, such as private communication networks, are often used as a secure means of networking between physical machines for sharing computing resources and data between users. It is not uncommon for secure networks to require connectivity between an application running within the secure network and a host on a remote server outside the secure network. Fig. 1 depicts an example secure network 10 containing application 13 running on physical machine 12 that is connected to a particular host 34 on remote server 30 via a multi-tenant content delivery network, web application firewall, or load balancer 32. In these scenarios, since such secure networks connect several different physical machines together and may be running proprietary programmes or processing confidential data, it is desirable to implement additional cybersecurity measures to ensure that malicious parties cannot get unauthorised access to any part of the secure network. Similarly, such measures may also stop data from being exfiltrated from within the secure network to outside the network where control over data may be lost. However, often the more cybersecurity measures, typically security software (e.g., firewalls and antivirus software) and configurations (e.g., enforcing all traffic to go via a proxy server), that are implemented on a secure network, the worse those physical machines perform as some processing power has to be saved for use by such monitoring agents.

With the advent of cloud computing, secure networks are moving away from physical machines towards more ephemeral environments. Instead of dedicating an entire physical machine to a given process that may not need all the computing resources at all times, virtual machines can be set up and destroyed as necessary to perform bespoke tasks such as compiling code or processing data. Use of virtual machines instead of physical machines in a secure network is inherently more secure because virtual machines may be short lived, reducing the window of opportunity for malicious actors. Additionally, each virtual machine acts as a separate machine that is unable to interfere with processes occurring on a different virtual machine.

However, for each virtual machine that is created on the secure network, the virtual machine requires its own cybersecurity implementation, including security software and configurations, because the virtual machine is separate to all the others. This leads to extensive duplication of security software, which increases the size of every virtual machine, and has the same if not larger impacts on performance as for physical machines. Additionally, setting up appropriate configurations for each virtual machine can be onerous. Moreover, other security issues such as DNS leakage may persist.

Therefore, there is a need for secure networks with virtual machines that maintain high standards of cybersecurity, particularly when connecting to a host on a remote server, without the need for individual security software and configurations.

### Summary of the Disclosure

The invention is defined by the claims, with further embodiments defined by the dependent claims.

A first aspect of the disclosure relates to a method of connecting to a host on a remote server outside a secure network from an application running on a virtual machine hosted within the secure network, the method comprising (a) establishing, by a connection handshake server on the secure network, a non-encrypted connection with the application; and (b) establishing, by the connection handshake server, an encrypted connection between the host and the application via the connection handshake server. The encrypted connection is established by (i) receiving, from the application via the non-encrypted connection, a handshake message, (ii) in response to a determination that the encrypted connection should be allowed based on the handshake message, sending the handshake message to the remote server, and (iii) receiving an encryption certificate associated with the host to establish the encrypted connection with the host on behalf of the application. By using a connection handshake server in this way, a virtual machine is unable to exfiltrate any data or connect with sources external to the secure network that could compromise the integrity of the secure network without approval or checks by the connection handshake server, thus improving the integrity of the secure network. Thus, instead of needing to install security software (e.g. firewalls) or configurations (e.g. enforcing all traffic to go via proxy servers) within each virtual machine, both of which may need to be tailored to specific guest operating systems, the present invention enables network traffic to be controlled at the secure network boundary, providing a deeper level of control and observability of activity from and to the secure network. In essence, the virtual machines in the secure network can run as an untrusted guest without needing to mandate particular security controls being applied to or set up within them individually.

In certain embodiments, the connection handshake message comprises a host indicator, and the determination is based on whether the host indicator is unexpected. The host indicator may comprise any one or more of a hostname, a uniform resource locator (URL) or domain. Checking the connection handshake message in this manner helps to prevent a virtual machine from connecting to a malicious (or otherwise unexpected) host that may also be on the same server as an acceptable (or expected) host for which the host indicator was swapped once an address of the remote server was determined.

In certain embodiments, prior to sending the handshake message to the remote server, the method further comprises establishing, by the connection handshake server, a second non-encrypted connection with the remote server and the handshake message is sent to the remote server via the second non-encrypted connection. This allows communication between the virtual machine and the remote server while allowing the connection handshake server to act as an intermediary to control any communications between the virtual machine and the remote server.

In certain embodiments, the second non-encrypted connection is established after it is determined that the encrypted connection should be allowed. This means that no external queries or communications are sent outside of the secure network until after it has been determined that the connection the virtual machine is trying to make is safe.

In certain embodiments the non-encrypted connection and the second non-encrypted connection are transmission control protocol (TCP) connections and the connection handshake server is a TCP server.

In certain embodiments, establishing the non-encrypted connection comprises: receiving, by a digital phonebook server on the secure network, a digital phonebook query from the application; and sending, by the digital phonebook server, to the application, a virtual address associated with the secure network or an address of a physical machine on which the connection handshake server is hosted. This allows the virtual machine to resolve any address queries without the query needing to be sent outside of the secure network directly by the virtual machine. The virtual address may be a fixed address.

In embodiments where the address is a virtual address associated with the secure network, establishing the non-encrypted connection comprises receiving, by a software firewall on the secure network, a request for the non-encrypted connection to the virtual address associated with the secure network; and in response to determining that the request for the non-encrypted connection is to the virtual address, redirecting, by the software firewall, the request for the non-encrypted connection to the connection handshake server. This allows the software firewall to easily identify communications that are intended to be sent outside of the secure network and re-route them via the connection handshake server so that they can be properly assessed and handled in order to filter out malicious connections.

In certain embodiments, receiving the digital phonebook query comprises: intercepting, by a software firewall on the secure network, the digital phonebook query from the application; and redirecting, by the software firewall, the digital phonebook query to the digital phonebook server. This means that the virtual machine and/or the application does not need to be made aware of the digital phonebook server and does not require additional configuration protocols to redirect to the digital phonebook server to resolve digital phonebook queries.

In certain embodiments, the connection handshake server and/or the digital phonebook server is hosted on a physical machine that the virtual machine is also hosted on. This reduces the need for complex networking between different physical machines on the secure network and instead allows internal addresses on the physical machine to be used.

In certain embodiments, the digital phonebook server is a domain name system (DNS) server and the digital phonebook query is a DNS query.

In certain embodiments, the encrypted connection is a transport layer security (TLS) connection and the handshake message is a ClientHello message. The host indicator may be a server name indication (SNI) and the determination that the encrypted connection should be allowed comprises performing SNI inspection. The SNI may be encrypted.

In certain embodiments, establishing, by the connection handshake server, the encrypted connection further comprises making the determination that the encrypted connection should be allowed. Using the connection handshake server to make the determination helps to centralise the control of communications from several virtual machines and could facilitate further monitoring or trends of how different applications and virtual machines are trying to connect with remote servers outside of the secure network.

In certain embodiments, the method further comprises intercepting, by a software firewall, the handshake message from the application; making, by the software firewall, the determination that the encrypted connection should be allowed; and sending, by the software firewall, the handshake message to the connection handshake server. Using the software firewall to make the determination in this way can help reduce load on the connection handshake server which may be forwarding data from several different virtual machines.

In certain embodiments, data sent between the connection handshake server and the remote server is via a hardware firewall located outside a physical machine that hosts the virtual machine and between the remote server and the physical machine.

A second aspect of the disclosure relates to a secure network comprising a virtual machine configured to run an application; and a connection handshake server in communication with the virtual machine. In this aspect, the secure network is configured to connect to a host on a remote server outside the secure network from the application running on the virtual machine according to the methods of the first aspect of the disclosure.

In certain embodiments, the secure network may also comprise a digital phonebook server in communication with the virtual machine and/or a software firewall configured to monitor network traffic exiting the virtual machine.

A third aspect of the disclosure relates to a computer program comprising instructions that when executed by a secure network having a virtual machine configured to run an application and a connection handshake server in communication with the virtual machine, cause the secure network to connect to a host on a remote server outside the secure network from the application running on the virtual machine according to the methods of the first aspect of the disclosure.

A fourth aspect of the disclosure relates to a non-transitory computer readable storage medium comprising instructions that when executed by a secure network having a virtual machine configured to run an application and a connection handshake server in communication with the virtual machine, cause the secure network to connect to a host on a remote server outside the secure network from the application running on the virtual machine according to the methods of the first aspect of the disclosure.

### Brief Description of the Drawings

Embodiments of the invention are described below, by way of example, with reference to the following drawings, in which:
Fig. 1 shows a prior art secure network and how an application running on a physical machine may connect with a host on a remote server.
Fig. 2A shows a physical machine in which the methods of the invention may be implemented. Fig. 2B shows components of the system memory of the physical machine of Fig. 2A in further detail. Fig. 2C shows components of media virtual machine of the physical machine of Fig. 2A.
Fig. 3A shows a cloud computing environment in which the methods of the invention may be implemented. Fig. 3B and Fig. 3C show further components of the cloud computing environment, including virtual machines.
Fig. 4 shows a secure network and how an application running on a virtual machine may connect with a host on a remote server.
Fig. 5 shows a flow chart outlining the steps of a method of connecting to a host on a remote server outside a secure network from an application running on a virtual machine hosted within the secure network.
Fig. 6 shows a flow chart outlining the steps of a method of providing an address to an application running on a virtual machine for establishing a connection with a connection handshake server or remote server.
Fig. 7 shows a diagram demonstrating an embodiment of the invention.

### Detailed Description

Fig. 1 shows a prior art secure network 10 comprising a physical machine 12 running an application 13. The application has a secure (e.g. encrypted) connection with a host 34 on a remote server 30 that is outside of the secure network 10. The remote server 30 may comprise several hosts 34, 36, each running its own application. For example, each host 34, 36 may be a website that is running on the remote server 30. Since the remote server 30 is outside of the secure network 10, it is possible for the connection between the secure network 10 and the remote server 30 to be monitored.

The boundary of the secure network 10 represents the separation between resources that a system administrator has control over (i.e. devices on the secure network 10 such as physical machine 12) and resources that an administrator does not have control over. There may be data or devices on the secure network 10 that need to be protected from being compromised such as by remote access from an external source trying to get into the network, or by exfiltration of data from inside the secure network 10 to outside the secure network 10 where it is no longer possible to control who has access to that data.

In such prior art systems, when the application 13 wishes to establish a connection with the host 34 connection, an address is needed, such as an internet protocol (IP) address, on which to locate the other machine being connected to. Typically, this is done through a digital phonebook server (not shown), where the name of the host 34 (i.e. a hostname) is provided as a digital phonebook query to a digital phonebook server, which looks up an address of the remote server 30 on which it is running and responds to the query with the address. A common form of digital phonebook server is a domain name system (DNS), and DNS queries are sent to a DNS server typically run by an internet service provider (ISP) i.e. not hosted within the secure network 30 itself.

In some circumstances, a digital phonebook server may not have encountered a given hostname before and so has no address to provide in response to the query. In such cases, the digital phonebook server may then send a query to a different digital phonebook server until eventually, the query reaches a final server that either has an address or confirms that the hostname does not exist. In passing through each digital phonebook server, the request is logged or cached for future use. This process can be used to exfiltrate data out of a secure network 10 by using a spoofed hostname that simply contains information that a malicious user wishes to send outside of a network. A separate malicious device can then access the cached query to retrieve the data from outside of the secure network. This kind of attack is commonly referred to as DNS leakage.

Once the application 13 has an address of the remote server 30, an initial, non-encrypted, connection may be established with the remote server which can then forward communications to the host 34 using a Multi-Tenant Content Delivery Network 32. This connection may be a transmission control protocol (TCP) connection. In order to prevent third parties being able to read communications between the application and the host 34 (including the remote server itself or other hosts), an encrypted connection may be established within the non-encrypted connection.

A single remote server 30 may have several different hosts (hosts 34 and 36) which all have the same address (e.g. the same IP address). When establishing an encrypted connection, it is necessary to identify the specific host 34 on the remote server 30 so that the correct security certificates, which may contain information such as public encryption keys or other authentication means, can be exchanged and only the host 34 on the remote server 30 may read the incoming communications. Each host 34 has an associated host indicator for the remote server 30 to identify which host a communication is intended for and direct the communication accordingly.

The host indicator comprises any one or more of a hostname, a uniform resource locator (URL) or domain.

In the system of Fig.1, should the application 13 be a malicious piece of software, a particular attack may be for the application 13 to request the address of the remote server 30 based on one host 34 (e.g. through a DNS query discussed above), and then connect to a different host 36 on the same server 30 in order to exfiltrate data from within the secure network 10. For example, physical machine 12 may determine the address of *"example.com"* which may be an approved or safe host 34. However, *"example.com"* may also be on the same remote server 30 as *"example.net"* which is not a safe host 36. A malicious application 13 may establish a non-encrypted connection to the remote server 30 based on providing the hostname *"example.com"* to a digital phonebook server and receiving the address of the remote server 30. When actually establishing the encrypted connection with a host on the remote server 30, rather than requesting the certificate of *"example.com",* the application 13 may substitute the hostname for *"example.net"* and connect to a different host 36 that the secure network has no control over.

In contrast to what is shown in Fig. 1, where connection is established between an application 13 running on a particular physical machine 12 within secure network 10 and a host 34 on a remote server 30, methods of the invention use virtual machines to run applications. Communications entering and exiting a virtual machine are typically visible on a single port, regardless of the number of applications running on a virtual machine. Therefore, using a virtual machine to run applications on a secure network instead of physical machine 12 makes it easier to monitor and filter communications before they leave the secure network.

In some implementations, the virtual machines are hosted on a particular physical machine within the secure network. In other implementations, the virtual machines are hosted within a cloud computing environment that forms at least part of the secure network. Each of these implementations is discussed in turn.

### Physical Machine Implementation

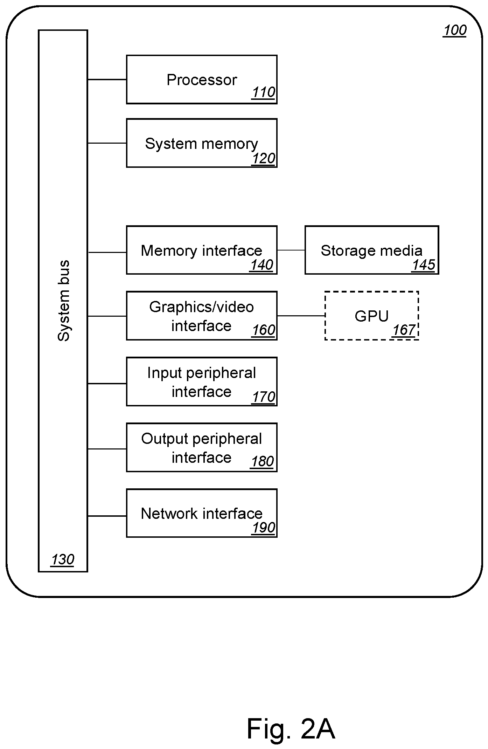

Fig. 2A shows an example physical machine 100 in which the methods of the invention may be implemented. Physical machine 100 may be embodied as any type of computer, including a server.

Components of physical machine 100 include, but are not limited to, a processor 110, such as a central processing unit (CPU), system memory 120, and system bus 130. System bus 130 provides communicative coupling for various components of physical machine 100, including system memory 120 and processor 110. System bus 130 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 130 is formed of volatile and/or non-volatile memory such as read only memory (ROM) and random-access memory (RAM). ROM is typically used to store a basic input/output system (BIOS), which contains routines that boots the operating system and sets up the components of physical machine 100, for example at start-up. RAM is typically used to temporarily store data and/or program modules that the processor 110 is operating on.

Physical machine 100 includes other forms of memory, including (computer readable) storage media 145, which is communicatively coupled to the processor 110 through a memory interface 140 and the system bus 130. Storage media 145 may be or may include volatile and/or non-volatile media. Storage media 145 may be or may include removable or non-removable storage media. Storage media 145 may be within physical machine 100 or external to physical machine 100. Examples storage media 145 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 145 may be stored according to known methods of storing information such as computer readable instructions, data structures, program modules or other data, the form of which is discussed further herein.

In some embodiments, physical machine 100 is communicatively coupled to an external display device via a graphics/video interface 160 and system bus 130. Alternatively, physical machine 100 may have an integrated display which is communicatively coupled via the graphics/video interface 160 and system bus 130. Optionally, a graphical processing unit 167 (GPU) may be used in addition to improve graphical and other types of processing.

Physical machine 100 may also include an input peripheral interface 160 and an output peripheral interface 170 that are communicatively coupled to the system bus 130. Input peripheral interface may be communicatively coupled to one or more input devices, for interaction between the physical machine 100 and a human operator. Example input devices includes a keyboard, a mouse, a touchscreen, and a microphone. In some embodiments, the touchscreen and display may use the same screen. Output peripheral interface 180 may be communicatively coupled to one or more output devices. Example output devices include speakers and a printer. The communicative coupling may be wired, such as via a universal serial bus (USB) port, or wireless, such as over Bluetooth.

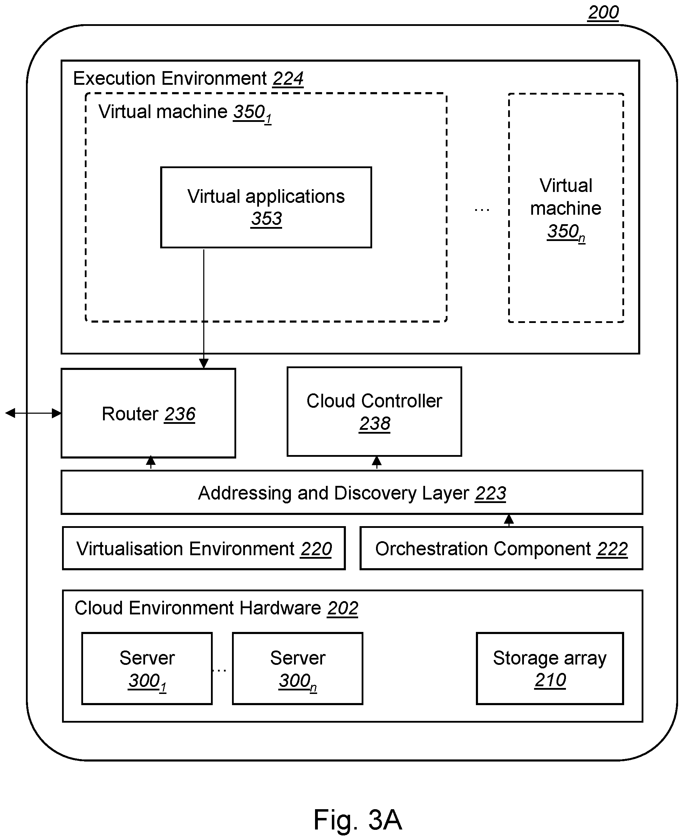

Physical machine 100 communicates to other machines, and optionally a cloud computing environment 200 as discussed below with respect to Fig. 3A, within the secure network and with remote servers using at least one communication network. The at least one communication network typically includes at least the Internet. Other communication networks may be used including a local area network (LAN) and/or a wide area network (WAN). Physical machine 100 establishes communication with secure network and outside of the secure network through network interface 190. For example, when the physical machine is communicating with other devices on the secure network, LAN protocols may be used, whereas WAN or IP protocols may be used when communicating with remote servers that are outside of the secure network.

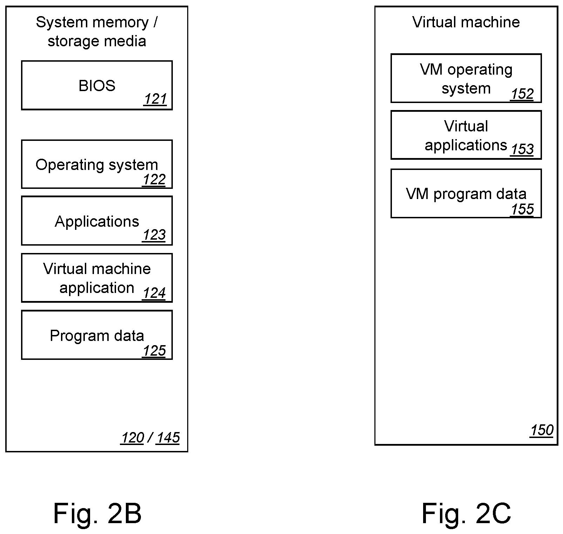

As shown in Fig. 2B a number of program modules may be stored on the system memory 120 and/or storage media 145, including an operating system 122, one or more applications 123, a virtual machine application 124, and program data 125.

When virtual machine application 124 is run on physical machine 100, the virtual machine application 124 causes a virtual machine 150 to be hosted on the physical machine 100. The virtual machine application 124, when executed, will allocate computing resources from the physical machine 100 that can be used by the virtual machine 150. The virtual machine is then able to run software and execute applications, such as virtual applications 153, in an isolated environment that cannot interact directly with the operation of the physical machine 100 itself. For example, the virtual machine 150 may have its own operating system 152 that may be different from the operating system 122 of the physical machine 100. The virtual machine may function as an equivalent of a standard x86 hardware architecture such that any x86 supported operating system, e.g., Microsoft Windows, Linux, etc. The virtual machine 150 may have its own virtual applications 153 which, when run by the virtual machine 150, cannot access the computing resources of the physical machine 100 directly and can only access memory that is allocated to the virtual machine 150 through a virtual addressing scheme to store and retrieve virtual machine program data 155. This also means that applications 123 running on the physical machine 100 separate from the virtual machine also cannot directly access the virtual machine program data 155. The virtual machine includes emulated hardware such as virtual hard drive, virtual network adaptor, virtual RAM, and virtual CPU. The virtual applications 153 can be any software that could also run on any physical machine 100. For example, the virtual applications may be a web browser that attempts to connect with a remote server in order to browse the websites hosted on the remote server. When sending communications over a network from the virtual machine 150, communications, such as data packets, typically become visible to the physical machine 100 when the virtual machine application 124 exposes the communications on a network port of the physical machine. Whereas a conventional physical machine may make use of a number of ports for different applications, all of the communications from and to the virtual machine may pass through a single port, because the virtual machine is, in reality, only a single virtual machine application 124 running on the physical machine. This makes it easier to monitor the network traffic that the virtual machine is creating.

In certain implementations, the methods of the invention may be implemented in one physical machine 100, or across multiple physical machines 100. In such implementations, the methods of the invention may be implemented as one or more applications 123 that are stored in respective storage media 145 of the physical machines 100. In some embodiments, all methods of the invention may be implemented by one application 123, or different aspects of the method may be encapsulated by different applications 123. The advantage of implementing the methods of the invention through application 123 on a physical machine is that the applications 123 do not need to be implemented on each virtual machine that is created via the virtual machine application 124 and/or by a cloud computing environment 200, as discussed further below.

### Cloud Computing Implementation

Fig. 3A is a schematic illustrating an example cloud computing environment 200 for implementing methods of the invention. The cloud computing environment 200 may form at least part of the secure network, or may be the entire secure network (i.e. forming a virtual private cloud). The cloud computing environment 200 may be used in conjunction with one or more physical machines 100.

Cloud computing environment 200 can communicate with other devices on the secure network or devices outside of the secure network (e.g. a remote server) via at least one network interface (not shown). Network interface may be the same as described with respect to Fig. 2A.

Cloud computing environment 200 may be operated or used by a third party, i.e. a party that is not the owner of the secure network. Examples of third-party cloud computing environments include Amazon Web Services (AWS), Microsoft Azure, Google Cloud Platform, and IBM Cloud. Cloud computing environment 200 is able to benefit from economies of scale, thereby making processing and storing large quantities of data in cloud computing environment 200 efficient.

Cloud computing environment 200 may host one or more virtual machines 350 that have virtual applications 353 similar to the virtual applications 153 of the virtual machine 150 hosted by physical machine 100 described above.

As seen in Fig. 3A, cloud computing environment 200 comprises cloud computing environment hardware 202 that can be invoked to instantiate virtual machines 350 for a limited or defined duration. Cloud computing environment hardware 202 may comprise one or more servers 300₁ to 300ₙ, and a storage array network 210, as well as any other suitable hardware. Cloud computing environment hardware 202 may be configured to provide a virtualisation environment 220 that supports the execution of the plurality of virtual machines 350 across the one or more servers 300₁ to 300ₙ.

Virtualisation environment 220 of Fig. 3A includes orchestration component 222 that monitors the cloud computing environment hardware 202 resource consumption levels and the requirements of cloud computing environment 200 (e.g., by monitoring communications routed through addressing and discovery layer 223), and provides additional cloud computing environment hardware 202 to cloud computing environment 200 as needed. For example, if cloud computing environment 200 requires additional virtual machines 350, orchestration component 222 can initiate and manage the instantiation of the virtual machines 350 on the one or more servers 300₁ to 300ₙ to support such needs. In one example implementation, virtualisation environment 220 may be implemented by running Amazon Elastic Compute Cloud (Amazon EC2) on servers 300₁ to 300ₙ. It should be recognised that any other virtualisation technologies, including VMware ESX and Microsoft Hyper V virtualisation technologies, may alternatively be utilised.

Cloud computing environment 200 supports an execution environment 224 that comprises the virtual machines 350 instantiated to host virtual applications 353. Virtual applications 353 of cloud computing environment 200 are similar to the virtual applications 153 described with respect to virtual machine 150 on the physical machine 100..

Referring back to Fig. 3A, addressing and discovery layer 223 provides a common interface through which components of cloud computing environment 200, such as cloud controller 238, router 236 and virtual machines 350 in the execution environment 224 can communicate.

Cloud controller 238 is configured to orchestrate the deployment process for virtual applications 353 into cloud computing environment 200. For example, a user of the cloud computing services may be looking to run or execute an application for data processing. Cloud controller 238 sets up a virtual machine 350 to run the application as a virtual application 353. This means that multiple different virtual machines 350 of the cloud computing environment 200 can run applications, without the running applications conflicting with one another, since the virtual applications 353 are run on separate virtual machines 350 from one another.

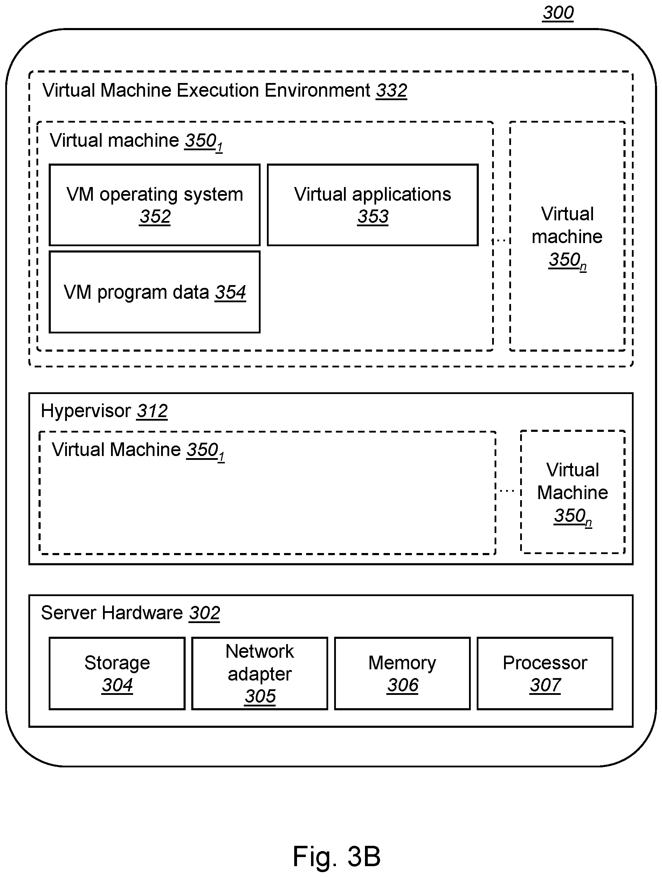

Typically, once cloud controller 238 successfully orchestrates the virtual application 353 in virtual machine 350, the virtual application 353 may communicate outside of the cloud computing environment 200 and even outside of the secure network in which the cloud computing environment 200 resides. Router 236 is responsible for communications to and from the virtual machine 350 once communications are exposed on a port of a physical device that the virtual machine is running on (i.e. the server 300 discussed with respect to Fig. 3B).

In some embodiments, methods of the invention may be implemented in the cloud computing environment 200 (for example, when there are no other physical machines 100 in the secure network or when the methods are not being implemented in the physical machines 100 within the secure network). For example, the router 236 may be used to implement the methods of the invention. Regardless of where the methods of the invention are implemented (i.e. whether it be in the physical machine 100 or cloud computing environment 200), virtual machines may be either within cloud computing environment 200 or on physical machine 100.

It should be recognised that the embodiment of Fig. 3A is merely exemplary and that alternative cloud computing environment architectures may be implemented consistent with the teachings herein.

Fig. 3B is a schematic of an exemplary server 300 (i.e. a particular type of physical machine) for cloud computing environment 200 for implementing a method of the invention shown first in Fig. 3A. In particular, Fig. 3B depicts server 300 comprising server hardware 302 and virtual machine execution environment 332 having virtual machines 350 with virtual applications 353. The server hardware 302 may include local storage 304, such as a hard drive, network adapter 305, system memory 306, processor 307 and other I/O devices such as, for example, a mouse and keyboard (not shown).

A virtualisation software layer, also referred to as hypervisor 312, is installed on top of server hardware 302. Hypervisor 312 supports virtual machine execution environment 332 within which virtual machines 350 may be concurrently instantiated and executed. In particular, each virtual machine 350 provides VM operating system 352, virtual applications 353 and VM program data 354. This enables virtual machine 350 to execute computer code 324 in a manner which is isolated from the physical hardware (e.g. server hardware 302, cloud computing environment hardware 202), allowing for consistent deployment regardless of the underlying physical hardware.

It should be recognised that the various layers and modules described with reference to Fig. 3B are merely exemplary, and that other layers and modules may be used with the same functionality without departing from the scope of the invention.

### Overview of Network System

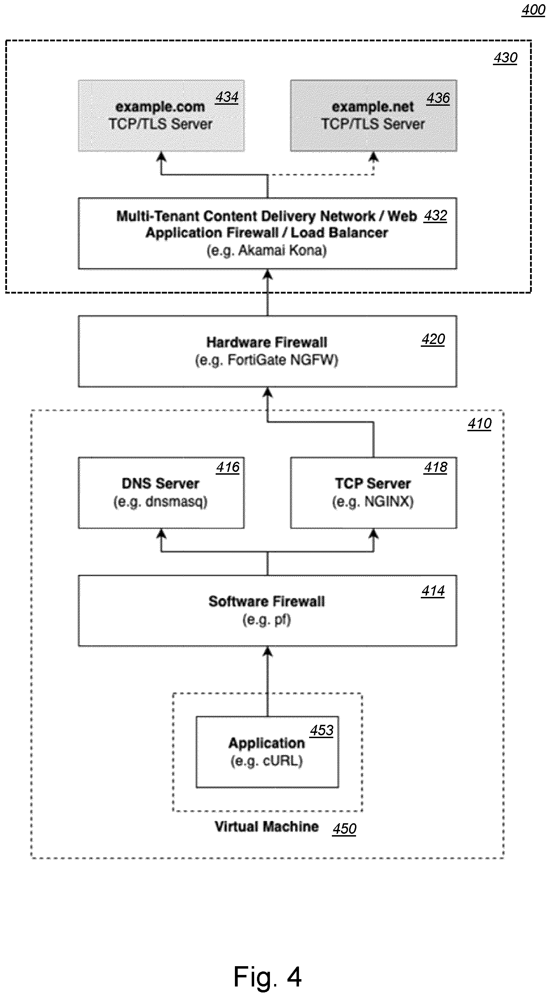

Before moving on to the specific methods of the invention, attention is drawn to Fig. 4 which outlines a system 400 of the invention. Unlike in the arrangement of Fig. 1, where the application 13 is hosted on physical machine 12 within secure network 10, in Fig. 4, the application 453 is hosted on a virtual machine 450 within secure network 410. The components of Fig. 4 are now discussed in further detail.

System 400 comprises a secure network 410. The secure network 410 may be similar to secure network 10 of Fig. 1 with several variations outlined below. In particular, the boundary of the secure network 410 represents the separation between resources that a system administrator has control over (i.e. devices on the secure network such as physical machine 12) and resources that an administrator does not have control over. There may be data or devices on the secure network 410 that need to be protected from being compromised such as by remote access from an external source trying to get into the network, or by exfiltration of data from inside the secure network 410 to outside the secure network 410 where it is no longer possible to control who has access to that data.

The secure network 410 comprises a virtual machine 450 that is running an application 453. Virtual machine 450 is the same as either virtual machine 150 of physical machine 100 discussed with respect to Fig. 2C, or virtual machine 350 of cloud computing environment 200. Similarly, application 453 may be virtual application 153 of the physical machine 100, or virtual application 353 of the cloud computing environment 200. The application 453 may wish to communicate with a host outside of the secure network 410 such as hosts 434 and 436 (discussed in more detail below).

Any network traffic sent by application 453 outside the virtual machine 450 will appear on a single port on the secure network 410. This port may be monitored by software firewall 414. Software firewall 414 can monitor traffic coming from the virtual machine 450, which may be from application 453 or some other program running on virtual machine 450. In monitoring this traffic the software firewall 414 can intercept, redirect or block data from being sent any further in order to prevent any malicious activity on the secure network 410. A suitable software firewall 414 for use with the invention is a packet filter (PF) firewall.

Software firewall 414 may redirect digital phonebook queries such as domain name system (DNS) queries to a digital phonebook server 416 located within the secure network 410. In some embodiments, as shown in Fig. 4, the digital phonebook server 415 is a DNS server. A DNS server may be a server running DNS caching software as dnsmasq. Digital phonebook queries are discussed in more detail below in connection with method 600.

Software firewall 414 may redirect requests to connect to a remote server, such as TCP requests, to connection handshake server 418 located within the secure network 410. In some embodiments, as shown in Fig. 4, the connection handshake server 418 is a TCP server. The TCP server may be running web server software such as NGINX to act as a reverse proxy. Connection handshake server 418 is discussed in more detail below in connection with method 500.

In order to communicate with outside of the secure network, the secure network 410 may send any network traffic through an optional hardware firewall 420. The hardware firewall may monitor the packets of any incoming or outgoing network communications in order to check for any data exfiltration or malicious activity. In some embodiments, as shown in Fig. 4, the hardware firewall 420 may be implemented using FortiGate Next Generation Firewall (Fortinet NGFW).

For example, the secure network 410 may be sending network communications to remote server 430. Remote server 430 may include various web firewalls, load balancers or multi-tenant content delivery networks 432 that can determine the specific hosts that any traffic is intended for as well as manage the network load on the server. Remote server 430 may comprise a plurality of hosts such as hosts 434 and 436 that may be running web applications. A host, as used herein and as shown in Fig. 4, may be a particular TCP/TLS server. The two hosts in Fig. 4, hosts 434 and 436, correspond to example.com and example.net respectively.

The connection handshake server 418 and digital phonebook servers 416 may themselves be virtual machines, separate physical machines on the secure network 410 or applications running on various devices across the network. For example, all the aspects of the secure network 410 shown in Fig. 4 can be implemented on a single device such as physical machine 100. The virtual machine 450 may be hosted through the virtual machine application 124 and the remaining elements such as the connection handshake server 418, digital phonebook server 416 and software firewall 414 may be their own separate applications 123 or further virtual machines 150 running virtual applications 153. Physical machine 100 may also be one machine that runs the virtual machine 450 and is part of a wider secure network of which the remaining components (e.g. the connection handshake server 418 and digital phonebook server 416) are a part.

Alternatively, the virtual machine 450 may be run in a cloud computing environment 200 as discussed in connection with Figs. 3A and 3B. The cloud computing environment 200 may then be in communication with the connection handshake server 418 and digital phonebook servers 416 located on other parts of the secure network.

### Establishing an Encrypted Connection

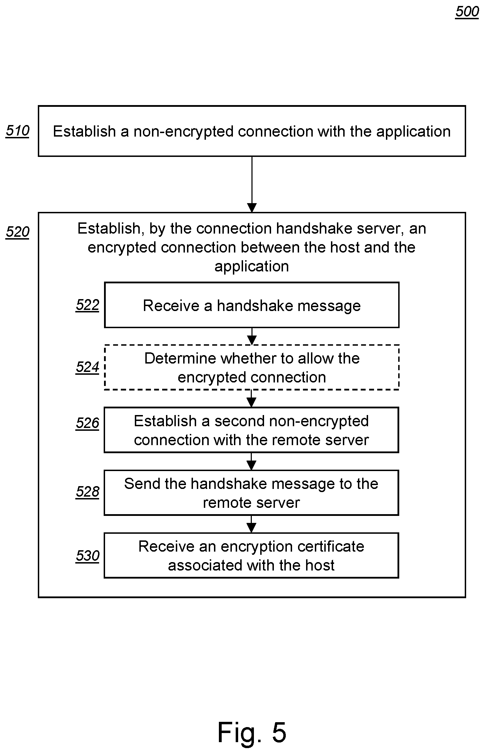

Fig. 5 shows method 500 of connecting to a host 434 on a remote server 430 outside of a secure network 410 from an application 453 running on a virtual machine 450 hosted within the secure network 410.

Method 500 begins with step 510, which comprises establishing, by a connection handshake server 418, a non-encrypted connection with the application 453 running on the virtual machine 450. Establishing, in this context, is intended to mean that the connection handshake server 418 receives a request for a connection from the application and completes the necessary connection protocols such as a TCP handshake. Alternatively, the connection handshake server may send a request for a connection to the application 453.

The non-encrypted connection may be a transmission control protocol (TCP) connection and the connection handshake server 418 is a TCP server.

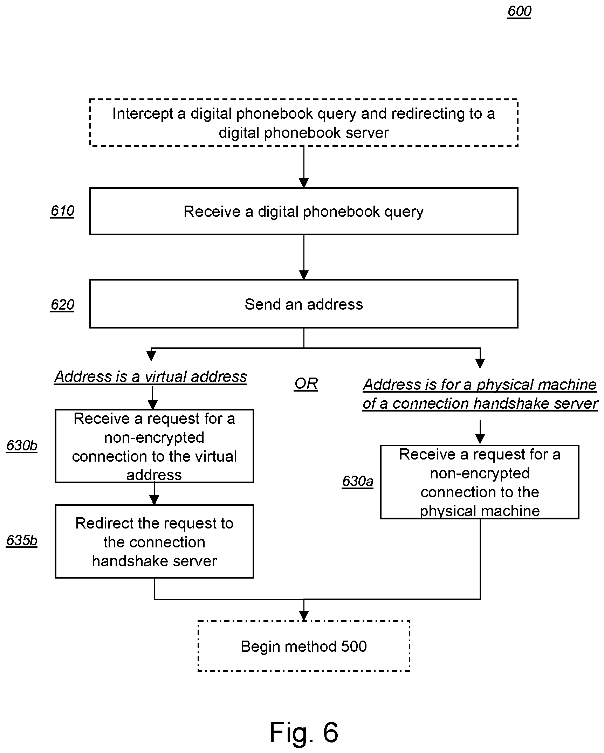

The virtual machine 450 may send the initial request to establish the non-encrypted connection directly to the connection handshake server 418. Alternatively, a software firewall 414 may intercept the connection request from the virtual machine 450 and redirect any traffic related to the non-encrypted connection to the connection handshake server 418. In this way, the virtual machine 450 does not need to be configured or made aware of the fact that the connection handshake server 418 exists, which reduces the need to modify any applications 413 running on the virtual machine 450 and improves the modularity of the virtual machine 450 within the secure network 410. This is discussed in more detail below in connection with method 600 of Fig. 6.

Method 500 then proceeds to step 520, which comprises establishing, by the connection handshake server 418, an encrypted connection between host 434 on the remote server 430 and the application 453. This allows application 453 to communicate with the host 434 (via connection handshake server 418) in a secure manner to protect any data that is being communicated from being read or understood by any malicious party that is between the secure network 410 and remote server 430. In addition, since the encrypted connection is sent through the non-encrypted connection (i.e. through the connection handshake server), the connection handshake server 418 can monitor the initial encryption handshakes to ensure that the application is connecting to where it is expected to.

As discussed above in connection with Fig. 1, an application running on a virtual machine (or physical machine) may determine the address of remote server based on one hostname associated with a host on the remote server and then establish an encrypted connection to a different host that is also on the same remote server. This can mean an application running somewhere on a secure network can connect to hosts that may not be safe in order to exfiltrate data outside of the network or otherwise compromise the secure network's integrity.

To mitigate this vulnerability, step 520 of method 500 comprises several additional steps. In step 522, the connection handshake server 418 receives, from the application 453 via the non-encrypted connection, a handshake message.

The handshake message may comprise a host indicator associated with a host on the remote server 430 that the application 453 wishes to connect to, this host indicator may identify an allowable host 434 which is known to be secure, or a malicious host 436, the security credentials of which are not known or are known to be suspicious.

The encrypted connection may be a TLS connection, and the handshake message is a ClientHello message. A host indicator of the handshake message typically comprises the hostname of the host that the application 453 is attempting to establish an encrypted connection with. Alternatively or additionally, the host indicator can comprise a uniform resource locator (URL, which typically comprises the hostname within it), a domain (which is typically a part of the hostname) or some other indicator that can specify the host 434 on the remote server 430 being connected to. This means that it is possible for the connection handshake server 410 to inspect the handshake message in order to check that the application is connecting with an allowable host 434. The handshake message may also comprise any of a client random (a string of random bytes), an indication of the encrypted handshake protocol or version of the protocol to use or a list of available cypher suites (e.g. Diff-Hellman) that can be used by the application 453.

In step 524, it may be determined by the connection handshake server 418 whether to allow the encrypted connection between host 434 and application 453. Alternatively, the determination may be performed by the software firewall 414 as discussed below. This determination may be based on an analysis of the handshake message to determine whether the handshake message is acceptable. For example, it may be determined whether the host indicator provided in the connection handshake message is the hostname associated with the host that the application 453 is expected to connect to. Continuing the example above, it may be expected that the application would connect to *"example.com"*but the hostname provided in the handshake message is *"example.net".* As a result, it may be determined that the encrypted connection should not be allowed and either not continue with establishing an encrypted connection, drop the non-encrypted connection entirely, or carry out some other remedial action to protect the integrity of the secure network 410.

A connection handshake server 418 may expect an application to connect to a host with a host indicator that is on a whitelist of allowable connections, or not on a blacklist of unallowable connections. Alternatively, it may be expected that an application should connect to the same host as was indicated in an initial digital phonebook query (discussed in further detail below) and not allow any encrypted connections that have a host indicator associated with a different or unexpected host. Packets may be monitored between the virtual machine when establishing the non-encrypted connection and the connection handshake server will then check that the host indicator in the handshake messages is consistent with any previous indications of a host that the connection handshake server has received in connection with the method 500.

For example, the connection may be acceptable if the connection handshake message does not include any host indicators that are unexpected and/or the host indicator provided in the handshake message is consistent with the host 434 that the application 453 is expected to connect to. A host indicator that is unexpected may comprise any one or more of a hostname, a URL or a domain associated with an unexpected host.

The determination can be a server name indication (SNI) inspection and the host indicator can be a SNI.

The SNI can be encrypted or not encrypted. If the SNI is not encrypted as this makes it easier for the connection handshake server to perform SNI inspection. If the SNI is encrypted, the connection handshake server may request an unencrypted version of the SNI, or may establish its own encryption scheme with the virtual machine before establishing the encrypted connection with the remote server.

As mentioned, the determination may be performed by the connection handshake server 418 directly. Alternatively, the determination may be performed by a software firewall 414 that is monitoring traffic coming out of the virtual machine 450. If the software firewall 414 determines that the connection should be allowed, the handshake message is forwarded to the connection handshake server 418.

For example, if the software firewall is used for the determination, step 524 may comprise intercepting, by the software firewall, the handshake message from the application and making, by the software firewall, the determination that the encrypted connection should be allowed. Should the connection be allowed by the software firewall, the software firewall may send or redirect the handshake message to the connection handshake server. Using the software firewall 414 to make the determination has the additional benefit that any queries sent by the virtual machine to other devices on the secure network 410 can be saved by the software firewall for future comparison. For example, any digital phonebook queries sent by the virtual machine (discussed further below) can be logged by the software firewall 414 to compare any host indicators in such a query with the handshake message to check for consistency. Similar benefits can be achieved by the connection handshake server if the connection handshake server 418 is also configured to communicate with other suitable devices (e.g. the digital phonebook server 416) on the secure network 410.

Should it be determined that the encrypted connection is allowed, method 500 proceeds to step 536 and the connection handshake server 418 will send the handshake message to the remote server 430.

Once a connection has been determined to be allowed, step 526 may comprise establishing, by the connection handshake server 418, a second non-encrypted connection between the connection handshake server 418 and the remote server 430. For example, the second connection may be a transmission control protocol (TCP) connection. Through the second connection, the connection handshake message can be sent so that the encrypted connection can be established between the application and the host on the remote server.

The connection handshake server 418 uses the hostname, URL or other host indicator present in the handshake message in order to identify the true address of the remote server 430. This is discussed in more detail below. Step 526 could be performed once the non-encrypted connection is established. While this may have a higher risk of DNS leakage than establishing the second connection after step 524, the second connection can also be dropped in response to determining that the encrypted connection is not allowed, and so provides some protection against malicious virtual machine 450 from attempting to establish an encrypted connection directly with an unsecure host 436.

Returning to method 500, once the encrypted connection has been determined to be allowable and the second connection has been established, method 500 proceeds to step 528 and the connection handshake server 418 sends the handshake message to the remote server. The handshake message may be sent via the second connection. In step 530, the connection handshake server receives back the necessary security certificates, which are forwarded to the application 453, to allow a connection between the application 453 on the virtual machine 450 and the host 434 on the remote server 430. In particular, the connection handshake server 418 receives an encryption certificate associated with the host to establish the encrypted connection with the host on behalf of the application. This can involve passing/sending the encryption certificate to the application through the non-encrypted connection.

Typically, once the encrypted connection has been established between the application 453 and the host 434, the connection handshake server 418 will then forward any communications between the two parties through the first and second connections. Because the communication is now encrypted, the connection handshake server 418 should not be able to read or monitor the communications passing along the connections. Alternatively, depending on the encryption protocol used, two separate encrypted connections can be established, one between the application 453 and the connection handshake server 418, and another between the connection handshake server 418 and the host 434. The connection handshake server 418 then decrypts any packets it received from the application 453 and then re-encrypts them to be sent on to the host 434.

Using a connection handshake server 418 as described in method 500 helps to prevent or make more difficult the exfiltration of any data outside the secure network 410 by the application. In particular, because the connection handshake server 418 (or software firewall 414) lies between the application 453 and the host 434 on the remote server 430, it may monitor packets that are to be sent to the remote server 430 (e.g. generic data packets, TCP SYN sequence packets, or packets used in the initial handshake to establish a connection).

### Establishing a Non-Encrypted Connection

To improve the ease of configuration of the virtual machine 450 on the secure network 410, it is desirable to make the barrier between the secure network 410 and the remote server 434 as invisible as possible.

In a further embodiment of the invention in this invention, a digital phonebook server 416 within secure network 410 is used that completely prevents any digital phonebook queries directly from virtual machines 450 from leaving the secure network 410. This does not prevent digital phonebook queries from the connection handshake server from leaving the secure network, which may be necessary for establishing the second non-encrypted connection (discussed below).

In order to combat DNS leakage as discussed in connection with Fig. 1, a further method 600, shown in Fig. 6, is provided which provides an address to the application 453 from which the virtual machine 450 can establish the non-encrypted connection between the application 453 and the connection handshake server 418, for example at step 510 of Fig. 5. Method 600 can be performed immediately preceding method 500 in order to establish the non-encrypted connection, or as an independent method in order to prevent DNS leakage.

Method 600 begins with step 610, which comprises receiving, by a digital phonebook server 416 located on the secure network 410, a digital phonebook query from the application 453.

In step 620, the digital phonebook server 416 sends to application 453, in response to the digital phonebook query, an address. Alternatively, if the host to be identified by the digital phonebook query is not recognised by the digital phonebook server 416 (for example, it is not on a whitelist of allowable connections), it may refuse to respond to the query in order to prevent DNS leakage.

The address may be an internet protocol (IP address) or any other address that allows a physical machine on a network to be identified.

There are several possibilities of what the address returned by the digital phonebook server might be. Firstly, the address could be for a physical machine 100 of the secure network 410, such as a physical machine on which the connection handshake server 418 is hosted. This means that in step 630a the virtual machine 450 can then establish the non-encrypted connection with the connection handshake server 418 assuming that it is establishing a connection with the remote server 430 directly, without the need for a redirecting software firewall 414.

Alternatively, in response to step 620, the digital phonebook server 416 may return a virtual address regardless of the query, or may return a virtual address for any query attempting to access a machine that is not on the secure network 410. Such a virtual address need not point to any physical machine. When the virtual machine 450 then attempts to initiate a connection with the virtual address, believing it is the address associated with the remote server 430, a software firewall 414 that is monitoring the traffic from the virtual machine 450 identifies the virtual address and redirects the connection to the connection handshake server 418 to establish the non-encrypted connection and begin the method 500. This means that the digital phonebook server does not need to be set up to know the specific address of the connection handshake server 418.

More specifically, when a virtual address is used, method 600 may further comprise receiving, by a software firewall on the secure network, a request for the non-encrypted connection to the virtual address associated with the secure network. In response to determining that the request for the non-encrypted connection is to the virtual address, the software firewall may redirect the request for the non-encrypted connection to the connection handshake server.

The virtual address may be a fixed address that does not change regardless of the host being queried in the digital phonebook query, or it may be a fixed address that does not change for any host that is outside of the secure network 410.

The virtual machine 450 may be configured to know that the digital phonebook server 416 exists and send any digital phonebook queries to it by default.

Alternatively, the virtual machine 450 may assume it is sending a digital phonebook query to a generic digital phonebook server that may be hosted outside of the secure network, for example, a DNS server run by an ISP. In such a scenario, method 600 may optionally include step 605 which comprises intercepting, by a software firewall 414 on the secure network 410, the digital phonebook query from the application and redirecting the digital phonebook query to the digital phonebook server 416.

Returning to the second non-encrypted connection established between the connection handshake server 418 and the remote server discussed in relation to step 526 of method 500 above, the connection handshake server 418 may determine the address on which to connect using the hostname indicator present in the connection handshake message. For example, using the hostname in the connection handshake message a Domain Name System (DNS) query (or other digital phonebook query) can be sent outside the secure network to determine the address of the remote server on which to connect using standard resolvers. Because at the point the second non-encrypted connection has been made the connection handshake message has been checked and determined to be allowable, there is minimal risk of DNS leakage from the connection handshake server to outside the secure network since any digital phonebook query being sent is much more likely to be legitimate and not contain any exfiltrated data.

### Example Applications

In an exemplary embodiment, a local DNS server (an example of a digital phonebook server 416 of method 600) never forwards queries to other DNS servers outside the secure network. This is done to prevent data exfiltration. It will only ever respond with a fixed/preconfigured IP address of the secure network, which can be any value, but would either be the address of a physical machine (as accessible via the virtual network interface) or another predetermined virtual address (e.g. 192.0.2.1). It will generally not be the actual IP address of the host (i.e. the value which would be returned by an external DNS resolver). The local TCP server (an example of the connection handshake server 418 of method 500), which receives all connections, is then responsible for forwarding connections onward, and performing DNS queries for the 'actual' values (using external DNS resolvers) when required (such as to establish the second non-encrypted connection in method 500).

Such a local DNS server (or other digital phonebook server 418) typically does not cache any queries since it returns addresses from a preloaded configuration such as a fixed address for devices not on the secure network, or actual addresses of devices on the secure network.

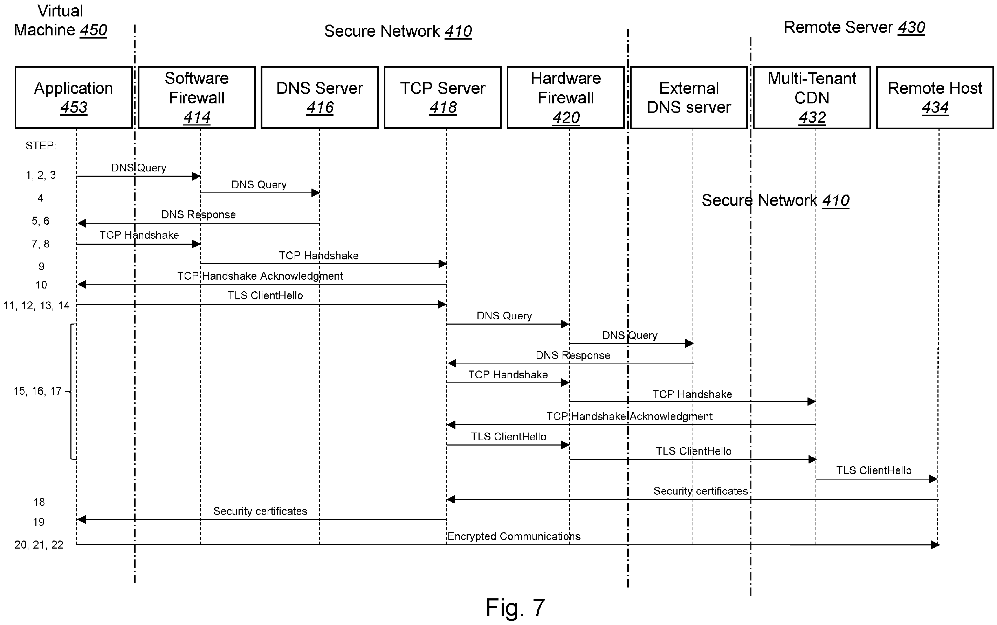

Below is provided an exemplary process of methods 500 and 600 combined when implemented on a secure network, particularly the secure network 410 of system 400 of Fig. 4. This exemplary process is also illustrated in Fig. 7, where corresponding step numbers to those listed below are shown.
1. Application 453 initiates process to connect to example.com.
2. Application 453 performs DNS query for example.com.
3. DNS query traffic exits virtual machine 450 and becomes visible to a physical machine on the secure network 410.
4. Software firewall 414 of the physical machine redirects DNS traffic (udp/53) to the local DNS server 416.
5. Local DNS server 416 responds to the DNS request with a local address.
   a. Alternatively, the local DNS server 416 may refuse the DNS request, in which case the process ends (not shown).
6. Local DNS server 416 may log the DNS request and response.
7. Application 453 initiates TCP connection to the address provided in the DNS response on predetermined port (e.g. 443 for HTTPS).
8. TCP connection exits the virtual machine 450 and becomes visible to physical machine on the secure network 410.
9. Software firewall 414 of the physical machine redirects the TCP connection to a local TCP server 418 (in the case of a virtual address being used).
   a. Alternatively, the software firewall 414 may reject outbound TCP connection (if attempting to circumvent controls by using different IP address), in which case the process ends (not shown).
10. Local TCP server 418 accepts the TCP connection and completes handshake.
11. Application 453 initiates a TLS handshake process within the established TCP connection.
12. Application 453 sends TLS ClientHello message containing Serve Name Indication (SNI) expansion.
13. Local TCP server 418 parses the ClientHello message and extracts SNI data.
14. Local TCP server 418 evaluates hostname and source address to decide whether to allow a TLS connection or not.
   a. Local TCP server 418 may drop connection if SNI data includes unexpected hostname (if attempting to circumvent controls by querying example.com but trying to handshake with example.net), in which case the process ends (not shown).
15. Local TCP server 418 allows connection and therefore makes a connection on behalf of virtual machine 450, determining the address of example.com from an external DNS server.
16. DNS and TCP traffic exits the physical machine and becomes visible to hardware firewall 420 of the secure network 410.
17. Hardware firewall 420, which may only evaluate destination IP address (and not SNI data), evaluates and permits a TCP connection.
   a. Alternatively, hardware firewall 420 may not allow TCP connection to destination IP address and/or port, in which case the process ends (not shown).
   b. Alternatively, hardware firewall 420 may perform similar SNI inspection to the local TCP server 418 and drop the connection if not authorised, in which case the process also ends (not shown).
18. CDN/WAF/LB 432 accepts the connection and completes the TCP handshake, and then completes the TLS handshakes with local TCP server 418 by sending the security certificates to the local TCP server 418.
   a. Alternatively, CDN/WAF/LB 432 may reject the connection for any reason (e.g. based on source IP address), in which case the process ends (not shown)
19. Application 453 completes TLS handshake with local TCP server 418 by receiving the security certificates sent from the CDN/WAF/LB 432 from the TCP server 418.
20. Application 453 communicates securely with the remote server 430 (via the local TCP server 418).
21. Application 453 closes the connection.
22. Local TCP server 418 logs the connection with volume of data sent and received.

### General

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following numbered embodiments form part of the description.
1. A method of connecting to a host on a remote server outside a secure network from an application running on a virtual machine hosted within the secure network, the method comprising: a) establishing, by a connection handshake server on the secure network, a non-encrypted connection with the application; and b) establishing, by the connection handshake server, an encrypted connection between the host and the application via the connection handshake server, by: receiving, from the application via the non-encrypted connection, a handshake message; in response to a determination that the encrypted connection should be allowed based on the handshake message, sending the handshake message to the remote server; and receiving an encryption certificate associated with the host to establish the encrypted connection with the host on behalf of the application.
2. The method of embodiment 1, wherein the connection handshake message comprises a host indicator, and wherein the determination is based on whether the host indicator is unexpected.
3. The method of embodiment 2 wherein the host indicator comprises any one or more of a hostname, a uniform resource locator (URL) or domain.
4. The method of any preceding embodiment, wherein the connection handshake server is hosted on a physical machine that the virtual machine is also hosted on.
5. The method of any preceding embodiment wherein, prior to sending the handshake message to the remote server, the method further comprises: establishing, by the connection handshake server, a second non-encrypted connection with the remote server; and sending the handshake message to the remote server via the second non-encrypted connection.
6. The method of embodiment 5, wherein the second non-encrypted connection is established after it is determined that the encrypted connection should be allowed.
7. The method of embodiment 5 or 6 wherein the second non-encrypted connection is a transmission control protocol, TCP, connection and the connection handshake server is a TCP server.
8. The method of any preceding embodiment, wherein the non-encrypted connection is a transmission control protocol, TCP, connection and the connection handshake server is a TCP server.
9. The method of any preceding embodiment, wherein establishing the non-encrypted connection comprises: receiving, by a digital phonebook server on the secure network, a digital phonebook query from the application; and sending, by the digital phonebook server, to the application, a virtual address associated with the secure network.
10. The method of embodiment 9, wherein establishing the non-encrypted connection with the application further comprises: receiving, by a software firewall on the secure network, a request for the non-encrypted connection to the virtual address associated with the secure network; and in response to determining that the request for the non-encrypted connection is to the virtual address, redirecting, by the software firewall, the request for the non-encrypted connection to the connection handshake server.
11. The method of embodiment 9 or 10, wherein the virtual address associated with the secure network is a fixed address.
12. The method of any of embodiments 1 to 8, wherein establishing the non-encrypted connection comprises: receiving, by a digital phonebook server on the secure network, a digital phonebook query from the application; sending, by the digital phonebook server to the application, in response to the digital phonebook query, an address of a physical machine on which the connection handshake server is hosted.
13. The method of any of embodiments 9 to 12, wherein the digital phonebook query is to the host, and wherein receiving the digital phonebook query comprises: intercepting, by a software firewall on the secure network, the digital phonebook query from the application; and redirecting, by the software firewall, the digital phonebook query to the digital phonebook server.
14. The method of any of embodiments 9 to 13, wherein the digital phonebook server is hosted on a physical machine that the virtual machine is also hosted on.
15. The method of any of embodiments 9 to 14, wherein the digital phonebook query is a domain name system, DNS, query.
16. The method of any of embodiments 9 to 15, wherein the digital phonebook server is a DNS server.
17. The method of any preceding embodiment, wherein the encrypted connection is a transport layer security, TLS, connection and the handshake message is a ClientHello message.
18. The method of embodiment 17, when dependent on embodiment 2, wherein the host indicator is a server name indication, SNI.
19. The method of embodiment 18, wherein the determination that the encrypted connection should be allowed comprises performing SNI inspection.
20. The method of embodiment 18 or 19, wherein the SNI is encrypted.
21. The method of any preceding embodiment, wherein establishing, by the connection handshake server, the encrypted connection further comprises making the determination that the encrypted connection should be allowed.
22. The method of any of embodiments 1 to 20, further comprising: intercepting, by a software firewall, the handshake message from the application; making, by the software firewall, the determination that the encrypted connection should be allowed; and sending, by the software firewall, the handshake message to the connection handshake server.
23. The method of any preceding embodiment, wherein data sent between the connection handshake server and the remote server is via a hardware firewall located outside a physical machine that hosts the virtual machine and between the remote server and the physical machine.
24. A secure network comprising: a virtual machine configured to run an application; and a connection handshake server in communication with the virtual machine, wherein the secure network is configured to connect to a host on a remote server outside the secure network from the application running on the virtual machine according to the method of any preceding embodiment.
25. The secure network of embodiment 24 further comprising a digital phonebook server in communication with the virtual machine.
26. The secure network of embodiments 24 or 25 further comprising a software firewall configured to monitor network traffic exiting the virtual machine.
27. A computer program comprising instructions that, when executed by a secure network having a virtual machine configured to run an application and a connection handshake server in communication with the virtual machine, cause the secure network to connect to a host on a remote server outside the secure network from the application running on the virtual machine according to the method of any of embodiments 1 to 23.
28. A non-transitory computer readable medium comprising instructions that, when executed by a secure network having a virtual machine configured to run an application and a connection handshake server in communication with the virtual machine, cause the secure network to connect to a host on a remote server outside the secure network from the application running on the virtual machine according to the method of any of embodiments 1 to 23.

## Claims

1. A method of connecting to a host on a remote server outside a secure network from an application running on a virtual machine hosted within the secure network, the method comprising:
a) establishing, by a connection handshake server on the secure network, a non-encrypted connection with the application; and
b) establishing, by the connection handshake server, an encrypted connection between the host and the application via the connection handshake server, by:
receiving, from the application via the non-encrypted connection, a handshake message;
in response to a determination that the encrypted connection should be allowed based on the handshake message, sending the handshake message to the remote server; and
receiving an encryption certificate associated with the host to establish the encrypted connection with the host on behalf of the application.

2. The method of claim 1, wherein the connection handshake message comprises a host indicator, and wherein the determination is based on whether the host indicator is unexpected, optionally wherein the host indicator comprises any one or more of a hostname, a uniform resource locator (URL) or domain.

3. The method of any preceding claim, wherein, prior to sending the handshake message to the remote server, the method further comprises:
establishing, by the connection handshake server, a second non-encrypted connection with the remote server, and
sending the handshake message to the remote server via the second non-encrypted connection.

4. The method of any preceding claim, wherein the non-encrypted connection is a transmission control protocol, TCP, connection and the connection handshake server is a TCP server.

5. The method of any preceding claim, wherein establishing the non-encrypted connection comprises:
receiving, by a digital phonebook server on the secure network, a digital phonebook query from the application; and
sending, by the digital phonebook server, to the application, a virtual address associated with the secure network.

6. The method of claim 5, wherein establishing the non-encrypted connection with the application further comprises:
receiving, by a software firewall on the secure network, a request for the non-encrypted connection to the virtual address associated with the secure network; and
in response to determining that the request for the non-encrypted connection is to the virtual address, redirecting, by the software firewall, the request for the non-encrypted connection to the connection handshake server.

7. The method of any of claims 1 to 4, wherein establishing the non-encrypted connection comprises:
receiving, by a digital phonebook server on the secure network, a digital phonebook query from the application;
sending, by the digital phonebook server to the application, in response to the digital phonebook query, an address of a physical machine on which the connection handshake server is hosted.

8. The method of any of claims 5 to 7, wherein the digital phonebook query is to the host, and wherein receiving the digital phonebook query comprises:
intercepting, by a software firewall on the secure network, the digital phonebook query from the application; and
redirecting, by the software firewall, the digital phonebook query to the digital phonebook server.

9. The method of any of claims 5 to 8, wherein the digital phonebook query is a domain name system, DNS, query, optionally wherein the digital phonebook server is a DNS server

10. The method of any preceding claim, wherein the encrypted connection is a transport layer security, TLS, connection and the handshake message is a ClientHello message.

11. The method of claim 10, when dependent on claim 2, wherein the host indicator is a server name indication, SNI, optionally wherein the determination that the encrypted connection should be allowed comprises performing SNI inspection.

12. The method of any preceding claim, wherein establishing, by the connection handshake server, the encrypted connection further comprises making the determination that the encrypted connection should be allowed.

13. The method of any of claims 1 to 11, further comprising:
intercepting, by a software firewall, the handshake message from the application;
making, by the software firewall, the determination that the encrypted connection should be allowed; and
sending, by the software firewall, the handshake message to the connection handshake server.

14. A secure network comprising:
a virtual machine configured to run an application; and
a connection handshake server in communication with the virtual machine,
wherein the secure network is configured to connect to a host on a remote server outside the secure network from the application running on the virtual machine according to the method of any preceding claim.

15. A computer program comprising instructions that, when executed by a secure network having a virtual machine configured to run an application and a connection handshake server in communication with the virtual machine, cause the secure network to connect to a host on a remote server outside the secure network from the application running on the virtual machine according to the method of any of claims 1 to 13.
